# EUROPEAN PATENT SPECIFICATION

(11) **EP 0 865 039 B1**
(45) Date of publication and mention of the grant of the patent: **29.05.2002**
(21) Application number: 97830112.5
(22) Date of filing: 12.03.1997
(51) Int. Cl.: G11B 7/26, B23Q 3/08, B65G 47/91

(54) **A supporting device for data-storage optical discs**
Vorrichtung zum Unterstützen von optischen Datenspeicherscheiben
Dispositif de support pour disques optiques d'emmagasinage de données

(43) Date of publication of application: 16.09.1998
(73) Proprietor: TAPEMATIC S.p.A., I-20052 Monza (Milano) (IT)
(72) Inventor: Perego, Luciano, 20050 Mezzago (Milano) (IT)
(74) Representative: Righetti, Giuseppe

(56) References cited:
- EP-A- 0 298 564
- DE-A- 4 340 595
- DE-U- 29 512 381
- PATENT ABSTRACTS OF JAPAN vol. 096, no. 005, 31 May 1996 & JP 08 019981 A (SONY CORP), 23 January 1996,
- PATENT ABSTRACTS OF JAPAN vol. 013, no. 519 (M-895), 20 November 1989 & JP 01 210238 A (NEC CORP), 23 August 1989,

## Description

The present invention relates to a supporting device for data-storage optical discs, of the type comprising the features disclosed in the preamble of claim 1.

In particular, the device in question is conceived for conveniently supporting data-storage optical discs, of the type usually referred to as "compact disc", "DVD" and the like for example, while the same are being processed in the course of their production cycle.

It is known that in machines intended for producing optical discs, holding of same in processing takes place in many cases by supporting devices essentially consisting of a rest plate, usually of circular form, on the upper surface of which supporting elements are mounted, each of them being arranged so as to receive one optical disc. Such supporting devices are further comprised of suction means, generally consisting of a vacuum pump adapted to generate a vacuum area, connected to the individual supporting elements by respective sealed ducts.

The presence of several different ducts originates from the requirement of carrying out loading and unloading of the optical disc onto and from the supporting elements at different processing stations. For this reason the simultaneous availability both of free optical discs adapted to be picked up from the rest plate and of optical discs firmly fixed to said plate for processing is essential.

In order to solve the above problem, a distribution valve interposed between the vacuum pump and the different ducts and capable of ensuring effectuation of the above operations is required, which involves some planning efforts. Difficulties in planning this distribution device are further increased by the fact that the rest plate must be capable of rotating, while the suction pump is integral with the equipment's bearing structure.

For the purpose of promoting a correct positioning of the optical disc, the shape of the supporting elements in the device substantially matches that of the optical disc they must receive.

In addition, the supporting element base is provided with holes that, through said ducts, bring the vacuum area into communication with the optical disc surface turned towards the rest plate. Said holes are such positioned that they are covered by the optical disc when the latter is placed on top of the supporting element. At this time, the pump action generates a pressure difference between the device interior and exterior so that the optical disc is tightly fixed against the supporting element, thereby preventing air from entering the above mentioned holes.

Since usually the rest plate is driven in rotation for bringing the various supporting elements close to the different processing or handling stations, by this technique possible displacements of the optical discs out of their seatings during the handling operations of the machine are avoided.

However, since the fixing holes of the optical disc are rather small, generation of a high pressure difference between the device interior and exterior is required in order to ensure a sufficient force so as to lock the disc. As a result, suction pumps of high power are to be used and a sealing tightness is to be ensured between the various components and/or ducts in which vacuum is wished to be maintained; at the same time it is to remember that the rest plate must be capable of moving.

Consequently, it is to be pointed out that the supporting device for optical discs of known type has drawbacks connected with the complex accomplishment of same.

Since this device is usually associated with a UV ray station for drying of a lacquer previously coated on the optical disc, the presence of further expedients capable of cooling the optical disc during radiation is required for avoiding both the optical disc and the components of the drying station being overheated.

To this end, the device is provided with a further air pump capable of blowing air through appropriate channel lines placed both inside and outside the rest plate, for reaching and cooling the optical disc close to its centre and at some areas of its periphery.

It is known from document DE-43-40-595-A1 an apparatus for mechanical separation of the coating from the substrate of CDs comprising a rotating milling head and a rest plate with one or more supporting elements arranged to receive CDs. Each supporting element, located on the rest plate, is connected by a duct to a vacuum pump, through a distribution valve, to lock the CD which is being worked by the rotating milling head by a suction effect created under the CD itself.

One of the main objects of the present invention is to ensure locking of the optical discs to the supporting element without generation of high vacuum values being required, thus making it possible to use a less powerful suction pump so that a perfect tightness does no longer represent a critical factor to the ends of a correct engagement of the discs.

It is a further object of the invention to achieve better cooling of the optical disc by allowing an air stream to substantially lick the whole surface thereof, thereby avoiding building up of undesired localized heat.

The foregoing and further objects that will become more apparent from the following description are substantially achieved by a supporting device for data-storage optical discs, of the type comprising the features disclosed in the characterizing part of claim 1.

Further features and advantages will best be understood from the detailed description of a preferred but non-exclusive embodiment of a supporting device for optical discs in accordance with the present invention. This description will be taken hereinafter with reference to the accompanying drawings given by way of non-limiting example, in which:
- Fig. 1 is a diagrammatic plan view of a machine for producing optical discs in which a supporting device in accordance with the invention is used;
- Fig. 2 is a perspective view of the supporting device;
- Fig. 3 is a plan view highlighting a supporting element of the device shown in Fig. 2;
- Fig. 4 is a sectional view of the supporting element taken along line IV-IV in Fig. 2;

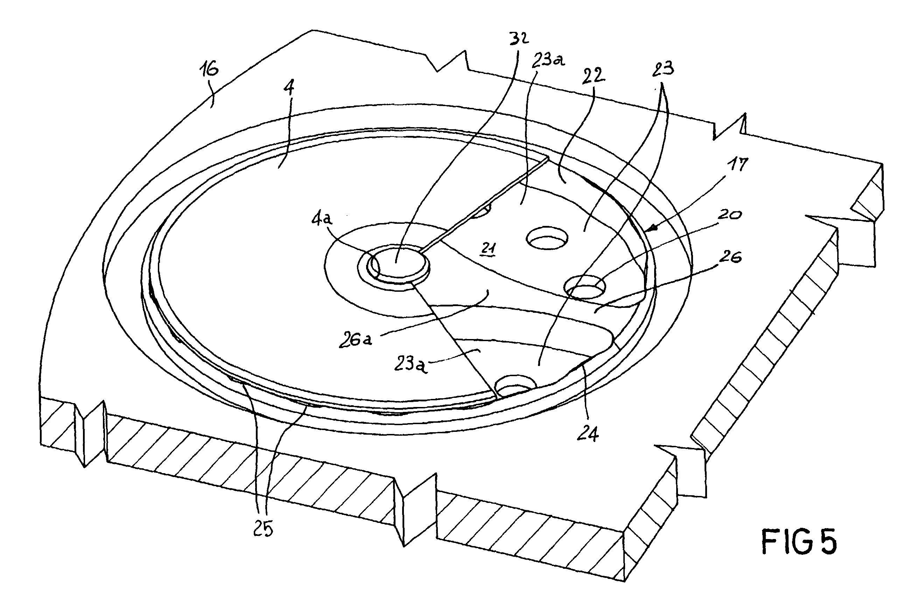

- Fig. 5 is a partly broken perspective view showing an optical disc laid on the supporting element shown in Figs. 3 and 4.

Referring to the drawings, a supporting device for data-storage optical discs has been generally identified by reference numeral 1.

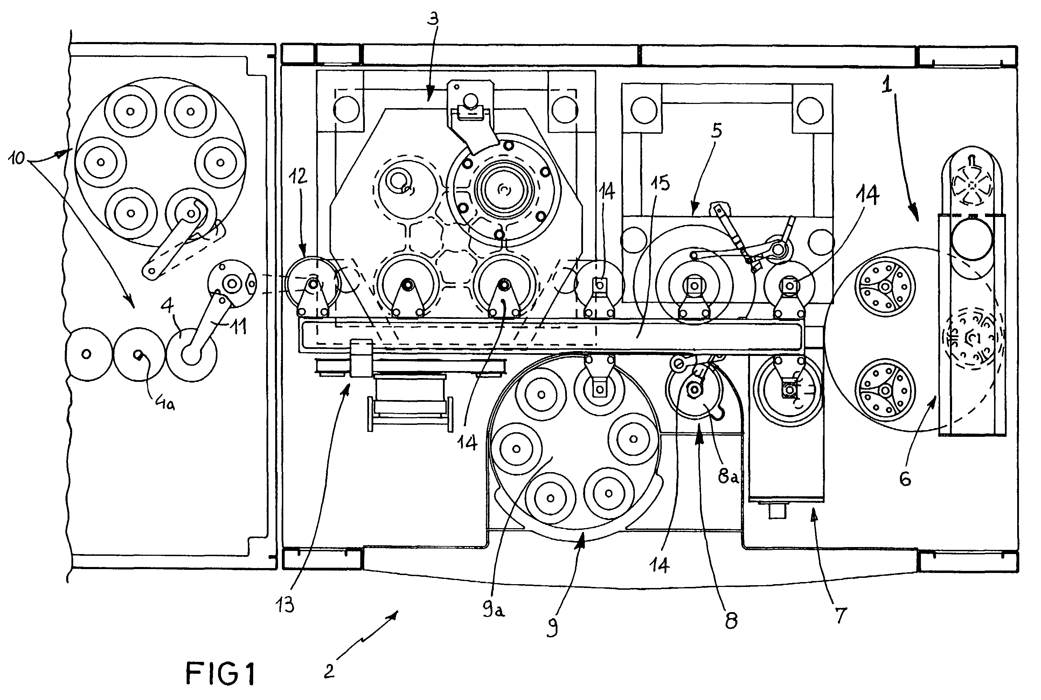

As shown in Fig. 1, this device can be incorporated into the structure of a machine for producing optical discs, generally denoted by 2.

In the embodiment shown, the machine 2 essentially comprises a metallizing station 3 arranged to deposit a reflective metal layer on one surface of each disc 4 being processed, a lacquering station 5 adapted to deposit a protective lacquer layer on the metallized surface of the optical disc 4, and a drying station 6 upon the action of which a quick drying of the lacquer applied in the lacquering station 5 occurs. The machine 2 further comprises a control station 7 at which a qualitative inspection is carried out on the finished disc, a selection station 8 provided with an auxiliary magazine 8a for collecting possible faulty discs, and an outlet station 9 provided with a collecting magazine 9a or equivalent means for storing the finished discs 4 in an orderly manner and/or moving them away from the machine 2.

The optical discs 4 coming from a feeding unit 10 connected with a moulding station not shown for example, are picked up by a handling device 11 provided with a rotating arm to be individually laid down at an inlet post 12 being part of the machine 2.

A transferring device 13 essentially comprising a plurality of pick-up members 14 operatively mounted to an arm 15 longitudinally movable with a reciprocating motion, carries out a sequential transferring of the optical discs 4 being processed between the different work stations 3, 5, 6, 7, 8 and 9.

The feeding unit 10 and the individual work stations 3, 5, 6, 7, 8 and 9, as well as the transferring device 13, are not described in detail as they are of no importance to the ends of the present invention. In any case for more details in relation to the transferring device 13 please refer to a co-pending application for a European patent filed on same day by the same Applicant.

All that being stated, in the embodiment shown the device 1 is arranged to support optical discs 4 coming from the lacquering station 5 and intended for being submitted to a drying step in the drying station 6, before being transferred to the control station 7.

In accordance with the invention, the supporting device 1 is comprised of a rest plate 16 with which at least one supporting element 17 arranged to receive an optical disc 4, is associated. In more detail, the rest plate 16 of the present device is provided with a preset plurality of circumferentially-distributed supporting elements 17 the number of which can be selected depending on requirements.

At least one of the supporting elements is subjected to a work station of the optical disc 4; in the device under examination the presence of three supporting elements can be noticed, one of which is at the drying station 6, whereas the two remaining supporting elements are at a location enabling positioning or removal of the optical discs 4 by the transferring device 13.

In operation, the rest plate 16 is driven in rotation step by step, so that at each step a predetermined supporting element 17 is brought to a predetermined work or handling station 6.

The device 1 further comprises air-sucking means 18 for creating a vacuum area 19, and connecting means 20 to bring each supporting element 17 into communication with said air-sucking means 18.

Each supporting element 17 comprises a base 21 and a side wall 22 arranged to support the optical disc 4 and defining, with the optical disc itself, at least one vacuum chamber 23, into which the connecting means 20 opens.

The side wall 22 is provided, at the upper part thereof, with bearing portions 24 arranged to support the optical disc 4 and openings 25 enabling passage of an air stream from the exterior of the device to the vacuum chamber 23.

Said bearing portions 24 and openings 25 are evenly distributed and are defined in an alternate sequence by an edge of an undulated profile 22a provided by the side wall 22.

Due to the suction effect produced by the air-sucking means 18, the bearing portions 24 and openings 25 address a cooling air stream from the optical disc periphery to the centre thereof, so that the whole lower surface of the disc is concerned. Arranged in the vacuum chamber 23 is at least one bulkiness-creating body aiming at reducing the chamber volume. In the particular embodiment herein shown the presence of three of said bulkiness-creating bodies 26 is provided, each of them extending from the supporting element 17 centre to the side wall 22 and spaced apart from each other by the same angle of 120° so as to divide the vacuum chamber 23 into as many portions 23a as the bodies.

Said bulkiness-creating bodies 26 have a substantially flat upper surface 26a so that a surface of the optical disc 4 can be laid thereon, thereby preventing the disc from undergoing an excessive deformation due to the vacuum existing in chamber 23.

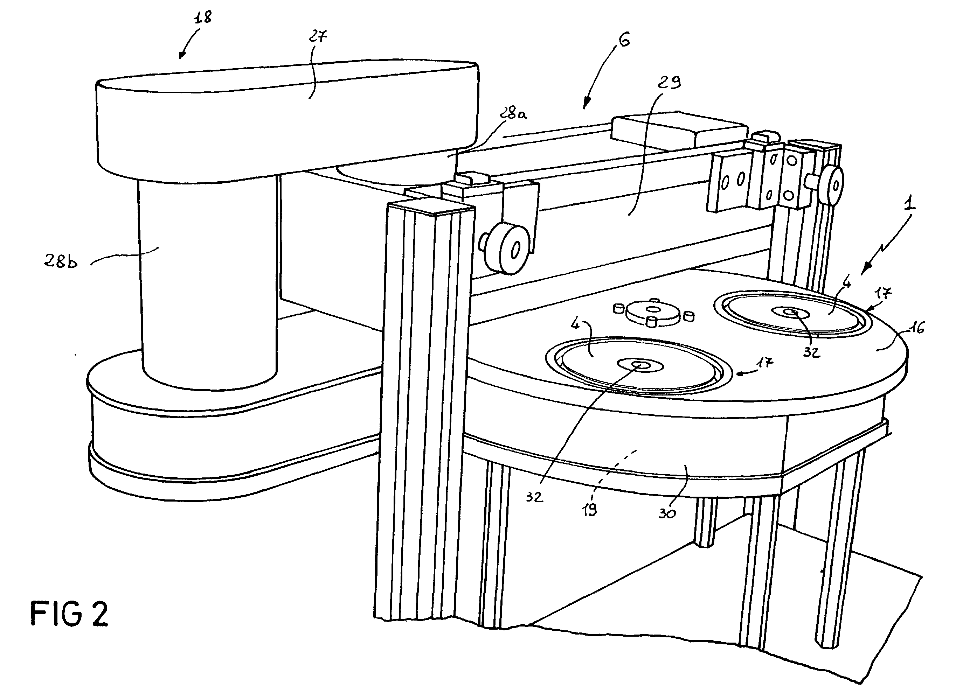

The sucking means 18 essentially consists of a suction pump (not shown) connected by an air-tight pipeline to a manifold 27 from which two suction ducts 28a, 28b depart. A first duct 28a is intended for cooling of a drying unit 29 being part of the drying station 6. The drying unit, in a manner known per se, carries out drying of a lacquer or size previously deposited on the disc 4 by UV radiation. The second suction duct 28b in turn communicates with a vacuum pre-chamber 30, defining said vacuum area 19 at the inside thereof. Pre-chamber 30 is formed adjacent to the rest plate 16 on the opposite side relative to the supporting elements 17, so that part of the pre-chamber 30 is defined by the rest plate itself. As shown in Fig. 2, the vacuum pre-chamber 30 and rest plate 16 substantially have the same radial overall dimensions. Under this situation, a direct connection is obtained between the area under a vacuum 19 and each of the supporting elements 17, through the connecting means 20 arranged inside the supporting elements, without particular channel lines and/or the interposition of distribution valve devices, as needed in the known art, being required for the purpose.

Advantageously, the previously mentioned connecting means 20 essentially consists of through holes disposed in the base 21 of each supporting element 17 and spaced apart the same angular distance from each other along a circumference the centre of which is on the axis of the supporting element. In the example herein shown, the through holes 20 are nine in number, three in each portion 23a of the vacuum chamber 23. In conclusion, the through holes 20 define respective connecting channels extending from chamber 23 to the supporting element 17, through base 21, to generate flow resistance in the air stream and therefore keep pre-chamber 30 under a vacuum even when one or more optical discs 4 are removed from the supporting element 17.

Actually, at the moment the optical disc 4 is taken away from its seating, immediately the atmospheric pressure is restored in chamber 23 and the air stream passing through the through holes 20 towards the vacuum area 19 defined in the pre-chamber 30 is increased.

Due to the sizes of holes 20 or equivalent connecting channels, only an air flow rate of low value is enabled to enter pre-chamber 30, so that the latter is maintained under a vacuum even in the absence of one or more discs 4 from the respective supporting elements 17.

Also present on each supporting element 17 is centering means 32 of the optical disc 4 to place the disc to a preset position on the supporting element. Said centering means comprises a pin 32 of the type usually employed for positioning of compact discs, located in register with a hole 4a in the optical disc 4 for mating therewith and preventing relative slidings between the disc and the supporting element 17.

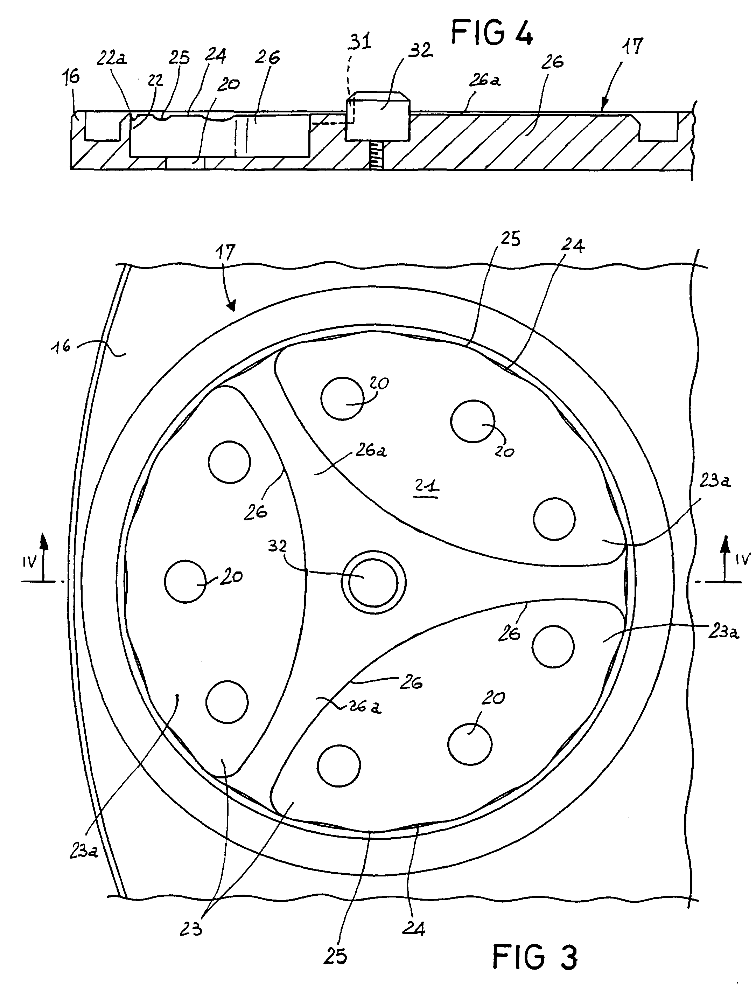

At the optical disc centre 4 the supporting element 17 may be provided with an optional air access 31 (shown in chain line in fig. 4) for addressing the cooling air stream from the centre to the periphery of the optical disc.

The invention achieves important advantages.

First of all, the device in accordance with the invention is capable of ensuring locking of the optical discs to the supporting elements so that the pressure difference generated between the external environment and the vacuum area 19 is much lower than in the prior apparatuses.

In fact a satisfactory locking force of the optical discs 4 to the respective supporting elements 17 can be achieved even if weak vacuum values are present within the vacuum chamber 19, because the invention enables the surface over which the vacuum effect is exerted on each optical disc to be greatly increased as compared with the known art. Actually, since the optical disc is supported by means of the bearing portions 24 of the side wall 22, the vacuum achieved within the vacuum chamber 23 acts on most of the lower surface of the optical disc.

The achieved result enables a suction pump of lower power to be employed, that possibly may consist of a mere sucking ventilation unit, which will bring about a reduction in the production and servicing costs.

In addition, it is pointed out that the presence of a vacuum chamber 23 for each supporting element 17, connected with the vacuum area 19 by the gauged through holes 20 makes it possible to remove one or more optical discs 4 from the supporting element without substantially reducing the vacuum in pre-chamber 30 and consequently ensuring locking of the remaining optical discs 4 under this circumstance too.

As a consequence of the above, at the moment a new optical disc is placed on an empty supporting element 17, creation of a vacuum for obtaining locking of same is required in the chamber of the supporting element alone and for achievement of this a very reduced operating Lime is needed.

This time is further lowered due to the fact that the volume taken up by air in chamber 23 is reduced by the presence of the bulkiness-creating bodies 26. Another important advantage of the invention is represented by the possibility of efficiently cooling the optical disc.

In fact an air stream is allowed to enter the vacuum chamber 23 through openings 25 located at the outer edge of the optical disc 4, so that towards the centre of the optical disc a fluid stream is generated which is capable of licking the lower surface of same, thereby removing heat therefrom.

In addition, cooling is further increased by enabling the air directed to chamber 23 to pass by the optical disc centre too, through optional passages 32.

The efficient removal of heat from the disc after the drying step allows achievement of an optimal stabilization of the lacquer or size on the optical disc.

The advantages thus obtained in an automatic production process are of great importance in that the production rate can be optionally increased or in any case the number of faulty optical discs that are to be discarded as a result of an excessive heat accumulation can be reduced.

## Claims

1. A supporting device for data-storage optical discs comprising:
- a rest plate (16) with which at least one supporting element (17) arranged to receive an optical disc (4) is associated,
- air-sucking means (18) for creating a vacuum area (19),
- connecting means (20) for communicating the supporting element (17) with the air-sucking means (18),
wherein the supporting element (17) comprises a base (21) and a side wall (22) arranged to support the optical disc (4) and defining, together with said optical disc (4), at least one vacuum chamber (23) into which the connecting means opens;
**characterized in that** the side wall (22) has bearing portions (24) arranged to support the optical disc (4) and openings (25) to enable passage of an air stream to the vacuum chamber (23).

2. A supporting device for optical discs according to claim 2, **characterized in that** the bearing portions (24) and openings (25) are evenly distributed on the side wall (22) of the supporting element (17).

3. A supporting device for optical discs according to claim 2, **characterized in that** said bearing portions (24) and openings (25) are defined, in an alternate sequence, by an edge of an undulated profile (22a) provided by the side wall (22).

4. A supporting device for optical discs according to claim 2, **characterized in that** said bearing portions (24) and openings (25) address a cooling air stream from the periphery to the centre of the optical disc (4), said stream therefore extending over the lower surface of same.

5. A supporting device for optical discs according to claim 1, **characterized in that** the supporting element (17) further comprises at least one bulkiness-creating body (26) for reducing the vacuum chamber (23) volume.

6. A supporting device for optical discs according to claim 6, **characterized in that** said bulkiness-creating body (26) extends from the supporting element (17) centre to the side wall (22).

7. A supporting device for optical discs according to claim 6, **characterized in that** said bulkiness-creating body (26) has a substantially flat upper surface (26a) to offer a rest for the optical disc (4) surface.

8. A supporting device for optical discs according to claim 1, **characterized in that** the sucking means (18) comprises a vacuum pre-chamber (30) a wall of which is defined by the rest plate (16), said pre-chamber being located at an opposite position relative to the supporting element (17).

9. A supporting device for optical discs according to claim 9, **characterized in that** the connecting means comprises a preset number of connecting channels (20) extending from the pre-chamber (30) to the supporting element (17).

10. A supporting device for optical discs according to claim 10, **characterized in that** said connecting channels (20) pass through the base (21) of the supporting element (17) thereby generating a flow resistance in the air stream in order to keep pre-chamber (30) under a vacuum when the optical disc (4) is removed from the supporting element (17).

11. A supporting device for optical discs according to claim 1, **characterized in that** the supporting element (17) further comprises centering means (32) of the optical disc (4) to locate said optical disc to a predetermined position on the supporting element.

12. A supporting device for optical discs according to claim 12, **characterized in that** the centering means comprises a pin (32) put in register with a hole (4a) in said optical disc (4) for mating therewith.

13. A supporting device for optical discs according to claim 1, **characterized in that** the supporting element (17) provides an air access (31) at the centre of the optical disc (4), to address a cooling air stream from the centre to the periphery of the optical disc.

14. A supporting device for optical discs according to claim 1, **characterized in that** associated with the rest plate (16) is a predetermined number of supporting elements (17) disposed circumferentially on the rest plate itself.

15. A supporting device for optical discs according to claim 15, **characterized in that** a work station (6) of the optical disc (4) is associated with at least one supporting element (17).

16. A supporting device for optical discs according to claim 16, **characterized in that** said work station (6) is a UV-ray drying station for a lacquer previously coated on the optical disc (4).

## Patentansprüche

1. Vorrichtung zum Unterstützen von optischen Datenspeicherscheiben, umfassend:
- einen Auflageteller (16), dem mindestens ein zur Aufnahme einer optischen Platte (4) bereitgestelltes Tragelement (17)zugeordnet ist,
- Luftansaugmittel (18) zur Erzeugung eines Unterdruckbereiches (19),
- Verbindungsmittel (20) zur Verbindung des Tragelementes (17) mit den Luftansaugmitteln (18),
wobei das Tragelement (17) eine Basis (21) und eine zum Stützen der optischen Platte (4) bereitgestellte Seitenwand (22) umfasst, die mit der optischen Platte (4) mindestens eine Unterdruckkammer (23) festlegen, in der die Verbindungsmittel (20) zusammenlaufen,
**dadurch gekennzeichnet, dass** die Seitenwand (22) zum Stützen der optischen Platte (4) bereitgestellte Auflageabschnitte (24) und Öffnungen (25) aufweist, um den Durchgang eines Luftstromes in Richtung der Unterdruckkammer (23) zu erlauben.

2. Vorrichtung zum Unterstützen von optischen Datenspeicherscheiben nach Anspruch 1, **dadurch gekennzeichnet, dass** die Auflageabschnitte (24) und die Öffnungen (25) regelmäßig an der Seitenwand (22) des Tragelementes (17) verteilt sind.

3. Vorrichtung zum Unterstützen von optischen Datenspeicherscheiben nach Anspruch 1, **dadurch gekennzeichnet, dass** die Auflageabschnitte (24) und die Öffnungen (25) in wechselartiger Folge durch einen wellenförmig profilierten Rand (22a) festgelegt werden, den die Seitenwand (22) aufweist.

4. Vorrichtung zum Unterstützen von optischen Datenspeicherscheiben nach Anspruch 1, **dadurch gekennzeichnet, dass** die Auflageabschnitte (24) und Öffnungen (25) einen Kühlluftstrom vom Umfang der optischen Platten (4) zur Mitte derselben richten, wobei der Luftstrom sich daher auf die untere Fläche derselben erstreckt.

5. Vorrichtung zum Unterstützen von optischen Datenspeicherscheiben nach Anspruch 1, **dadurch gekennzeichnet, dass** das Tragelement (17) überdies mindestens einen sperrigen Körper (26) zur Reduzierung des Volumens der Unterdruckkammer (23) umfasst.

6. Vorrichtung zum Unterstützen von optischen Datenspeicherscheiben nach Anspruch 5, **dadurch gekennzeichnet, dass** der sperrige Körper (26) sich von der Mitte des Tragelementes (17) bis zur Seitenwand (22) erstreckt.

7. Vorrichtung zum Unterstützen von optischen Datenspeicherscheiben nach Anspruch 5, **dadurch gekennzeichnet, dass** der sperrige Körper (26) eine im wesentlichen ebene, obere Fläche (26a) aufweist, um eine Auflage auf der Oberfläche der optischen Scheibe (24) herzustellen.

8. Vorrichtung zum Unterstützen von optischen Datenspeicherscheiben nach Anspruch 1, **dadurch gekennzeichnet, dass** die Luftansaugmittel (18) eine Unterdruckvorkammer (30) umfassen, von der eine Wand durch den Auflageteller (16) festgelegt ist, wobei die Vorkammer in einer zum Tragelement (17) abgewandten Stellung liegt.

9. Vorrichtung zum Unterstützen von optischen Scheiben nach Anspruch 8, **dadurch gekennzeichnet, dass** die Verbindungsmittel eine vorgegebene Anzahl von Verbindungskanälen (20) umfassen, die sich von der Vorkammer (30) zum Tragelement (17) erstrecken.

10. Vorrichtung zum Unterstützen von optischen Datenspeicherscheiben nach Anspruch 9, **dadurch gekennzeichnet, dass** die Verbindungskanäle (20) die Basis (21) des Tragelementes (17) durchqueren, wobei Strömungsverluste im Luftstrom erzeugt werden, um die Vorkammer (30) unter Unterdruck zu halten, sobald die optische Platte (4) vom Tragelement (17) abgenommen wird.

11. Vorrichtung zum Unterstützen von optischen Datenspeicherscheiben nach Anspruch 1, **dadurch gekennzeichnet, dass** das Tragelement (17) überdies Zentriermittel (32) der optischen Platte (4) umfasst, um die optische Platte in eine vorgegebene Stellung am Tragelement selbst zu bringen.

12. Vorrichtung zum Unterstützen von optischen Datenspeicherscheiben nach Anspruch 11, **dadurch gekennzeichnet, dass** die Zentriermittel einen Bolzen (32) umfassen, der im Bereich einer Bohrung (4a) der optischen Platte (4)liegt, um sich mit dieser zu verbinden.

13. Vorrichtung zum Unterstützen von optischen Datenspeicherscheiben nach Anspruch 1, **dadurch gekennzeichnet, dass** das Tragelement (17) einen Zutritt für die Luft (31) im Bereich der Mitte der optischen Platte (4) vorsieht, um einen Kühlluftstrom von der Mitte der optischen Platte selbst zu deren Umfang zu richten.

14. Vorrichtung zum Unterstützen von optischen Datenspeicherscheiben nach Anspruch 1, **dadurch gekennzeichnet, dass** dem Auflageteller (16) eine vorgegebene Anzahl von Tragelementen (17) zugeordnet ist, die längs des Umfangs am Auflageteller selbst angeordnet sind.

15. Vorrichtung zum Unterstützen von optischen Datenspeicherscheiben nach Anspruch 14, **dadurch gekennzeichnet, dass** mindestens einem Tragelement (17) eine Arbeitsstation (6) der optischen Platte (4) zugeordnet ist.

16. Vorrichtung zum Unterstützen von optischen Datenspeicherscheiben nach Anspruch 15, **dadurch gekennzeichnet, dass** die Arbeitsstation (6) eine Trockenstation über UV-Strahlen für einen zuvor auf die optische Platte gelegten Lack ist.

## Revendications

1. Dispositif de support pour disques optiques d'emmagasinage de données comprenant:
- un plateau d'appui (16) auquel est associé au moins un élément support (17) destiné à recevoir un disque optique (4),
- des moyens d'aspiration d'air (18) pour créer une zone à vide (19),
- des moyens de liaison (20) pour mettre l'élément support (17) en communication avec les moyens d'aspiration à vide (18),
dans lequel l'élément support (17) comporte une base (21) et une paroi latérale (22) destinée à soutenir le disque optique (4) et définissant, avec ledit disque optique (4), au moins une chambre à vide (23) à laquelle aboutissent les moyens de liaison;
**caractérisé en ce que** la paroi latérale (22) a des portions d'appui (24) destinées à soutenir le disque optique (4) et des ouvertures (25) pour permettre le passage d'un écoulement d'air vers la chambre à vide (23).

2. Dispositif de support pour disques optiques selon la revendication 1, **caractérisé en ce que** les portions d'appui (24) et les ouvertures (25) sont distribués de manière uniforme sur la paroi latérale (22) de l'élément support (17).

3. Dispositif de support pour disques optiques selon la revendication 1, **caractérisé en ce que** lesdites portions d'appui (24) et ouvertures (25) sont définis, en séquence alternée, par un bord à profil ondulé (22a) présenté par la paroi latérale (22).

4. Dispositif de support pour disques optiques selon la revendication 1, **caractérisé en ce que** lesdites portions d'appui (24) et ouvertures (25) dirigent un écoulement d'air de refroidissement depuis la périphérie vers le centre du disque optique (4), ledit écoulement s'étendant par conséquent sur la surface inférieure de ce dernier.

5. Dispositif de support pour disques optiques selon la revendication 1, **caractérisé en ce que** l'élément support (17) comporte en outre au moins un corps créant un encombrement (26) pour réduire le volume de la chambre à vide (23)

6. Dispositif de support pour disques optiques selon la revendication 5, **caractérisé en ce que** ledit corps créant un encombrement (26) s'étend depuis le centre de l'élément support (17) jusqu'à la paroi latérale (22).

7. Dispositif de support pour disques optiques selon la revendication 5, **caractérisé en ce que** le corps créant un encombrement (26) a une surface supérieure essentiellement plate (26a) pour fournir un appui à la surface du disque optique (4).

8. Dispositif de support pour disques optiques selon la revendication 1, **caractérisé en ce que** les moyens d'aspiration (18) comportent une pré-chambre à vide (30) dont une paroi est définie par le plateau d'appui (26), ladite pré-chambre étant mise à une position opposée par rapport à l'élément support (17).

9. Dispositif de support pour disques optiques selon la revendication 8, **caractérisé en ce que** les moyens de liaison comportent un nombre prédéterminé de canaux (20) s'étendant de la pré-chambre (30) à l'élément support (17).

10. Dispositif de support pour disques optiques selon la revendication 9, **caractérisé en ce que** lesdits canaux de liaison (20) traversent la base (21) de l'élément support (17) de manière à engendrer une perte de charge dans l'écoulement d'air pour maintenir la pré-chambre (30) sous vide quand le disque optique (4) est enlevé de l'élément support (17).

11. Dispositif de support pour disques optique selon la revendication 1, **caractérisé en ce que** l'élément support (17) comporte en outre des moyens de centrage (32) du disque optique (4) pour la mise en place dudit disque optique à une position prédéterminée sur l'élément support.

12. Dispositif de support pour disques optiques selon la revendication 11, **caractérisé en ce que** les moyens de centrage comportent un pivot (32) mis en correspondance avec un trou (4a) dans ledit disque optique (4) pour l'accouplement avec celui-ci.

13. Dispositif de support pour disques optiques selon la revendication 1, **caractérisé en ce que** l'élément support (17) prévoit une entrée pour l'air (31), au centre du disque optique (4), destinée à diriger un écoulement d'air de refroidissement depuis le centre vers la périphérie du disque optique.

14. Dispositif de support pour disques optiques selon la revendication 1, **caractérisé en ce qu'**un nombre prédéterminé d'éléments support (17) sont associés au plateau d'appui (16) et disposés sur le pourtour du plateau d'appui lui-même.

15. Dispositif de support pour disques optiques selon la revendication 14, **caractérisé en ce qu'**un poste de travail (6) du disque optique (4) est associé à au moins un élément support (17).

16. Dispositif de support pour disques optiques selon la revendication 15, **caractérisé en ce que** ledit poste de travail (6) est un poste de séchage aux rayons ultraviolets pour une laque précédemment enduite sur le disque optique (4).
